Europäisches Patentamt

(19) European Patent Office

Office européen des brevets

(11) Veröffentlichungsnummer: **0 033 463**
**B1**

(12) # EUROPÄISCHE PATENTSCHRIFT

(45) Veröffentlichungstag der Patentschrift:
29.05.85

(51) Int. Cl.⁴: **G 01 N 29/00,** G 01 N 29/04

(21) Anmeldenummer: **81100373.0**

(22) Anmeldetag: **19.01.81**

(54) Ultraschall-Multi-Sensor.

(30) Priorität: **30.01.80 DE 3003153**

(43) Veröffentlichungstag der Anmeldung:
**12.08.81 Patentblatt 81/32**

(45) Bekanntmachung des Hinweises auf die Patenterteilung:
**29.05.85 Patentblatt 85/22**

(84) Benannte Vertragsstaaten:
**BE DE FR GB IT NL**

(56) Entgegenhaltungen:
**AU - B - 503 347**
**DE - A - 2 023 929**
**DE - A - 2 329 386**
**DE - A - 2 643 126**
**DE - A - 2 719 141**
**DE - U - 7 500 305**

**J.u.K. Krautkrämer: "Werkstoffprüfung mit Ultraschall",**
**4. Auflage, 1980, Springer Verlag, S. 71**

(73) Patentinhaber: **INTERATOM Gesellschaft mit
beschränkter Haftung, Friedrich-Ebert-Strasse,
D-5060 Bergisch Gladbach 1 (DE)**

(72) Erfinder: **Cremer, Dieter, Immekeppeler Teich 8,
D-5063 Overath (DE)**
Erfinder: **Weiss, Hansjakob, Giselbertstrasse 5,
D-5060 Bergisch Gladbach 1 (DE)**
Erfinder: **Schüller, Falk, Dipl.-Ing., Am Rosenhügel 26,
D-5100 Aachen (DE)**

(74) Vertreter: **Mehl, Ernst, Dipl.-Ing. et al, Postfach 22 01 76,
D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Vorrichtung zur Feststellung von Gestalt und Oberflächenbeschaffenheit eines Gegenstandes, insbesondere in heißen Flüssigkeiten, mittels eines zentralen, gerichteten Ultraschallsenders und mehreren um diesen herum auf einem Umkreis angeordneten, gerichteten Empfängern. Gegenüber den üblichen Fernsehkameras kann mit Ultraschall nicht nur unter hoher Temperatur und radioaktiver Strahlenbelastung, sondern auch in undurchsichtigen Medien, beispielsweise in flüssigem Metall einer Kernenergieanlage oder im heißen Erdöl fernbedient geortet werden. In der DE-A-2 023 929 ist ein piezoelektrischer Ultraschallwandler beschrieben, der einen gerichteten, über einen weiten Abstand schmalen Schallstrahl unter Verwendung geringer Schallenergie erzeugt. Er besteht aus einem zentralen Sender und einer das Senderelement umgebenden piezo-elektrischen Empfangseinheit, die als ganzes ein Resonanzsystem bildet. Dieser piezoelektrische Ultraschallwandler ist besonders für medizinische Zwecke gedacht, wo es auf eine geringe Belastung durch die Schallenergie ankommt. Für die fernbediente Ortung von Oberflächen und deren Fehlern in Flüssigkeiten, insbesondere hoher Temperatur, ist dieser Wandler nicht geeignet, da er einerseits ein zu geringes Auflösungsvermögen aufweist und andererseits die Resonanzbedingungen der Empfangseinheit bei verschiedenen Temperaturen, selbst wenn das Material dieses aushalten würde, nicht einzuhalten sind.

In dem DE-U-7 500 305 wird allerdings eine Vorrichtung zur Übertragung und Konzentrierung von Schallwellen in einem flüssigen Medium, insbesondere in flüssigem Natrium, beschrieben. Ein Ultraschallsender gibt ein gerichtetes Signal in die Flüssigkeit. Wenn dieses Signal von einem Gegenstand reflektiert wird, kann es bei geeigneter Anordnung von einem Schallempfänger aufgenommen werden. Aus der gemessenen Laufzeit des Signals kann man die Entfernung des Gegenstandes berechnen. Die ganze Meßanordnung aus Sender und Empfänger ist durch einen Mechanismus drehbar und senkrecht verschiebbar, wodurch ein ausgewähltes Natriumvolumen untersucht werden kann. Damit das Schallsignal gebündelt werden kann, durchläuft es verschiedene Flüssigkeiten mit unterschiedlichen akustischen Eigenschaften und mit ebenen oder gewölbten metallischen Grenzflächen zwischen den Flüssigkeiten. Beim Durchtritt durch solche gewölbten Grenzflächen gelten ähnliche Gesetze wie in der Optik. Die bekannte Vorrichtung hat im wesentlichen zwei Nachteile. Einerseits sind zwischen Schallsender bzw. -empfänger und dem zu beobachtenden Objekt Gefäße mit unterschiedlichen Flüssigkeiten notwendig, so daß die Vorrichtung sehr viel Raum benötigt. Andererseits kann man mit dieser Vorrichtung nur Objekte orten, deren Oberfläche nahezu senkrecht zur Schallrichtung angeordnet ist. Daher ist eine Ortung von Oberflächenfehlern, z. B. Rissen nicht möglich.

Aus der AU-B-503 347 ist ferner ein Ultraschallwandler bekannt, der mit einer zentralen Elektrode und mehreren konzentrischen Ringelektroden bestückt ist. Durch eine über Zeitverzögerungsschaltungen modifizierte Ansteuerung der einzelnen Elektroden soll die zeitliche Fokussierung der räumlichen Fokussierung der Ultraschallsignale angepaßt werden, bzw. soll eine Variation des Fokus durch entsprechende Zeitverzögerungen möglich sein. Eine solche Anordnung erreicht jedoch auch bei Verwendung eines fokussierenden Schalldurchtrittselementes kein besonders hohes Auflösungsvermögen und eignet sich nicht zur punktweisen Abtastung von Oberflächen.

In der DE-A-2 643 126 wird ein gemeinsam bewegbares System von Sender und Empfängern beschrieben, welches zur Abtastung und Untersuchung von Objekten dient. Bei diesem Gerät spielt jedoch der benötigte Platz für Sender und Empfänger keine Rolle, so daß das Auflösungsvermögen durch die übliche Vergrößerung der Empfängerfläche oder Erhöhung der Frequenz gesteigert werden kann. Wege zur Steigerung des Auflösungsvermögens bei begrenzter Empfängerfläche und vorgegebener Maximalfrequenz können dieser Schrift nicht entnommen werden.

Aufgabe der vorliegenden Erfindung ist das Feststellen von Gestalt und Oberflächenbeschaffenheit eines Gegenstandes. Dabei soll auch die Ortung von geneigten Flächen möglich sein. Insbesondere die Untersuchung der Oberflächenbeschaffenheit verlangt ein besonders gutes Auflösungsvermögen und eine sehr präzise Führung des Meßkopfes. Darüberhinaus sollen die Abmessungen des Meßkopfes möglichst gering sein, was an sich einer Verbesserung des Auflösungsvermögens entgegensteht. Eine große Tiefenschärfe ist hingegen nicht notwendig und wird zugunsten der anderen Vorteile aufgegeben. Da diese Aufgaben unter den erschwerten Bedingungen, die das Innere eines Reaktors bietet, zum Beispiel hohe Temperatur, große Strahlenbelastung und flüssiges Natrium als Umgebungsmedium, gelöst werden müssen, stellen sich erhöhte Anforderungen bezüglich Material und Verarbeitung an das Gerät. Dazu kommt, daß eine höhere Frequenz als 4 MHz unter diesen Umgebungsbedingungen kaum verwirklicht werden kann. Es muß daher alles darangesetzt werden, das theoretisch mögliche Auflösungsvermögen bei dieser Frequenz zu erreichen.

Zur Lösung dieser Probleme wird eine Anordnung gemäß Anspruch 1 vorgeschlagen. Dabei werden mehrere Maßnahmen getroffen, die jede für sich schon eine Verbesserung des Auflösungsvermögens bewirkt und deren Kombination es ermöglicht, das theoretische Auflösungsvermögen praktisch zu erreichen. Zunächst werden Sender und Empfänger nicht mehr in einer Ebene angeordnet, sondern die in Sende- bzw. Empfangsrichtung liegenden Achsen von Sendern und Empfängern auf einen gemeinsamen Punkt ausgerichtet. Darüber hinaus werden Sender und Empfänger zusätzlich zur Doppelfokussierung mit Schalldurchtrittselementen ausgestattet, deren Brennpunkte bei Betriebsbedingungen in dem Schnittpunkt der Sender- bzw. Empfängerachsen liegen. Die gesamte Anordnung ist unter Beibehaltung dieser Eigenschaften dann in Position und/oder Richtung durch eine Fernsteuerung veränderbar. Experimente haben gezeigt, daß eine solche Anordnung ein Auflösungsvermögen von etwa der halben Wellenlänge der benutzten Schwingungsfrequenz besitzt, was der theoretisch überhaupt möglichen Auflösung entspricht. Da natriumbeständige Zuleitungen nur mit einer bestimmten Kapazität hergestellt werden können und auch bei den Ultraschall-Wandlern selbst Kapazitäten auftreten, ist die höchste verwendbare Frequenz etwa 4 MHz. Obwohl der Durchmesser der gesamten Vorrichtung kleiner als 20 cm ist, lassen sich damit Bohrungen und Risse von weniger als 1 mm Ausdehnung nachweisen.

Im Anspruch 2 wird in Ausgestaltung der Erfindung vorgeschlagen, den zentralen Sender ebenfalls als Empfänger zu benutzen. Das erfordert keinen zusätzlichen apparativen Aufwand und trägt, wie folgende Funktionsbeschreibung der Erfindung zeigt, wesentlich zur Lösung der Aufgaben bei.

Das vom zentralen Sender ausgehende Schallsignal wird von einer waagerechten Oberfläche in Schallrichtung reflektiert und von dem zentralen Empfänger registriert. Die von nicht waagerechten Oberflächen reflektierten Schallsignale werden entsprechend den optischen Gesetzen reflektiert und daher bei Neigungswinkeln bis etwa 30° zumindest von einem der den Sender umgebenden Empfänger registriert. Oberflächen mit einer Neigung von mehr als 30° kann man mit einer entsprechend geneigten Vorrichtung beobachten. Mit der vorgeschlagenen Ausrichtung der Achsen des Senders und mehrerer Empfänger auf einen gemeinsamen Punkt und der Fokussierung auf diesen Punkt kann man gerade kleine Objekte und Fehler orten, die sich in unmittelbarer Nähe dieses gemeinsamen Punktes befinden, weil kleine Fehlstellen das empfangene Schallsignal nicht zum Sender/Empfänger reflektieren, sondern zu den ihn umgebenden Empfängern. Wenn also die peripheren Empfänger summiert ein starkes Signal registrieren, der mittlere Empfänger aber ein schwaches, dann ist ein Fehler in der Oberfläche zu erwarten. Die Koordinaten der Vorrichtung und die in den einzelnen Empfängern registrierten Impulse und Laufzeiten der Schallsignale werden zweckmäßigerweise von einem Computer ausgewertet, gespeichert und beispielsweise auf einem Bildschirm sichtbar gemacht. Bei Einzelauswertung der von den außen liegenden Empfängern empfangenen Signale läßt sich auch die Neigungsrichtung einer beobachteten Fläche feststellen. Wenn also von mehreren gleichmäßig über den Umfang eines Kreises verteilten Empfängern einer ein starkes Signal und die beiden benachbarten Empfänger je ein gleich schwaches Signal erhalten, so kann man daraus schließen, daß die Oberfläche in Richtung auf den mittleren Empfänger geneigt ist. Wenn zwei benachbarte Empfänger ein gleich starkes Signal erhalten, so kann man daraus schließen, daß die Neigungsrichtung dieser Oberfläche zwischen diesen beiden Empfängern liegen wird.

In weiterer Ausgestaltung der Erfindung wird im Anspruch 3 vorgeschlagen, um den zentralen Ultraschall-Wandler acht Empfänger kreisförmig mit jeweils gleichem Abstand zum Schnittpunkt der Sender- bzw. Empfängerachsen anzuordnen. Das bedeutet, daß die Sender und Empfänger praktisch auf einer Kugelschale angeordnet sind. Dabei erweist es sich als besonders praktisch und für die Fernsteuerung sinnvoll, daß Sender und Empfänger in einem kompakten Block integriert werden. Auf diese Weise lassen sich auch die Ultraschall-Wandler vor dem Umgebungsmedium schützen.

Die im Anspruch 4 vorgeschlagene Ausgestaltung der Erfindung gibt eine besonders günstige Verteilung der Schalldurchtrittsflächen von Sender und Empfängern an. Bei der im Ausführungsbeispiel beschriebenen Anordnung ergibt sich bei vorgegebenem Durchmesser der Vorrichtung die beste Ausnutzung der vorhandenen Fläche dadurch, daß die Schalldurchtrittsfläche des Senders größer als die Schalldurchtrittsflächen jedes einzelnen der ihn umgebenden Empfänger ist.

Die Figuren 1 bis 5 zeigen ein mögliches Ausführungsbeispiel der Erfindung sowie eine räumliche Darstellung der Anwendung dieser Erfindung und zwei Abbildungen, die mit Hilfe einer erfindungsgemäßen Vorrichtung erzeugt wurden.

Figur 1 zeigt einen senkrechten Schnitt durch einen Ultraschall-Multi-Sensor in vergrößerter Darstellung.

Figur 2 zeigt eine Ansicht auf Figur 1.

Figur 3 zeigt eine schematische Darstellung der Anwendung der Erfindung.

Die Figuren 4 und 5 zeigen etwa im Originalmaßstab zwei verschiedene Darstellungen einiger Gegenstände, die mit der erfindungsgemäßen Vorrichtung aufgenommen, von einem Computer ausgewertet und auf einem Bildschirm sichtbar gemacht wurden.

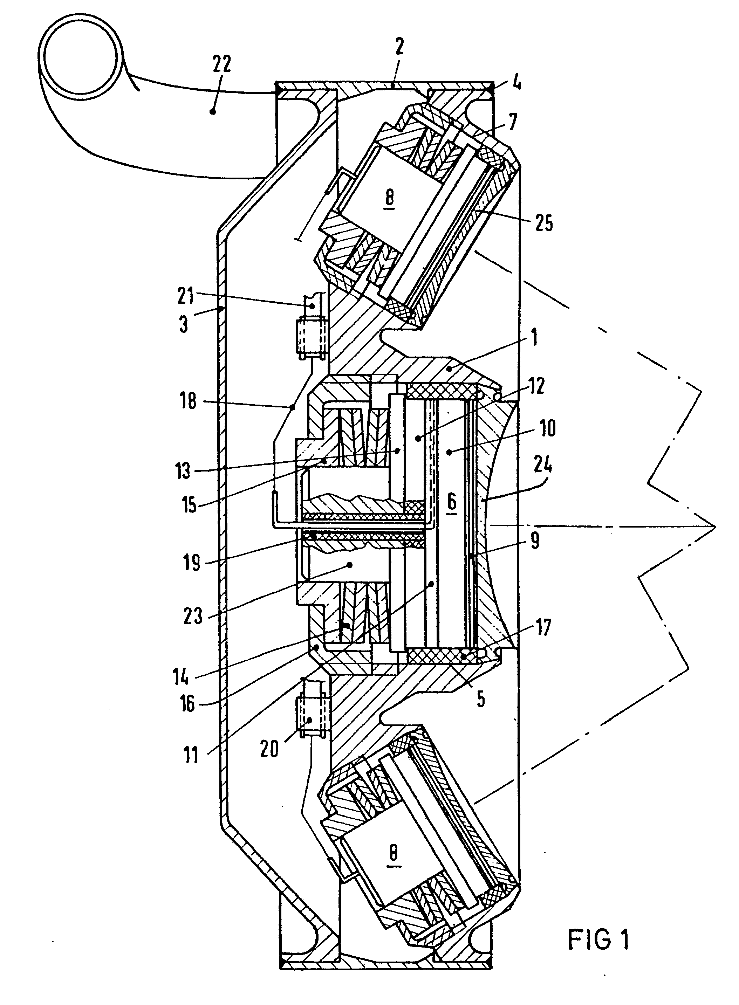

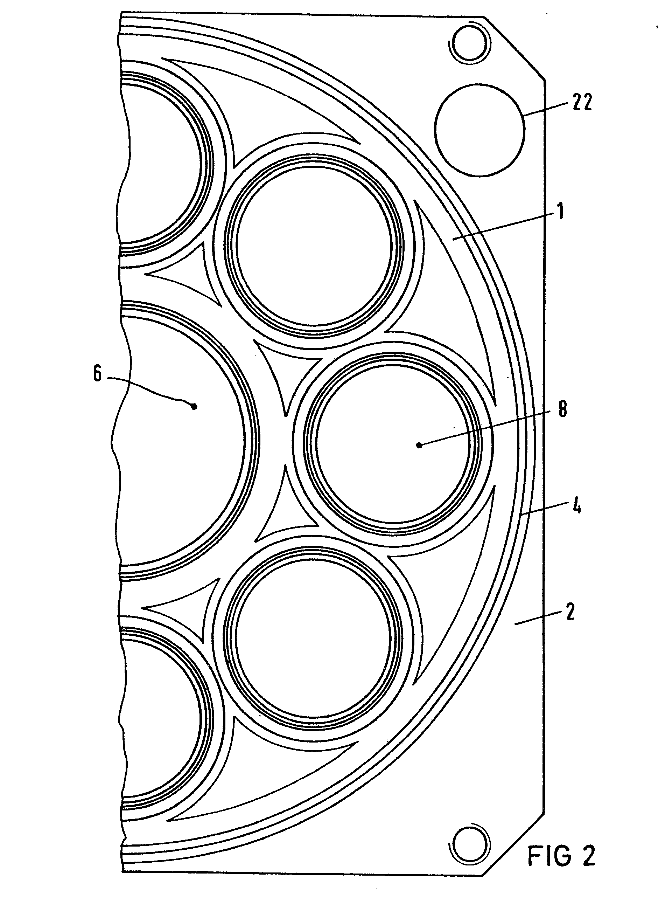

In den Figuren 1 und 2 ist das Vorderteil 1 mit dem Mittelteil 2 und der Rückwand 3 über Schweißlippen 4 dicht verbunden. Das Vorderteil 1 enthält eine zentrale und konzentrische Bohrung 5, für den Sender/Empfänger 6, die nach außen hin mit einer metallischen Linse 24 verschlossen ist, und acht etwas kleinere Bohrungen 7, für die Empfänger 8, die die zentrale Bohrung 5 umgeben und deren Achsen auf einem Kegelmantel liegen. Diese Bohrungen 7 sind nach außen mit metallischen Linsen 25 verschlossen, deren Brennpunkte mit dem Brennpunkt der Linse 24 zusammenfallen. Die Anordnung dieser Linsen und die sich aus ihrer Krümmung ergebenden Brennweiten sind so aufeinander abgestimmt, daß die Vorrichtung möglichst kompakt gebaut werden kann. In den Bohrungen 5 und 7 sind von außen nach innen betrachtet die folgenden Teile eingebaut, die zwar bei Bohrung 5 und 7 unterschiedliche Durchmesser haben aber im übrigen von gleicher Funktion sind. An der Innenfläche der Linse 24 liegt zunächst ein Piezo-Kristall 9 und daran ein Dämpfungskörper 10 mit einer Nut 11, der über ein Keramikplättchen 12, eine metallische Druckplatte 13, Tellerfedern 14, Druckstück 15 und eine Verschraubung 16 angepreßt wird. Linse 24, Piezo-Kristall 9 und Dämpfungskörper 10 sind an ihren Kontaktflächen jeweils sehr sorgfältig eben bearbeitet, einerseits damit an den Übergangsstellen keine störenden Verluste oder Reflexionen für den Schall auftreten und andererseits, damit der empfindliche Piezo-Kristall nicht zerbricht. Piezo-Kristall 9 und Dämpfungskörper 10 sind zur elektrischen Isolierung von einem kurzen Keramikrohr 17 umgeben. Der Piezo-Kristall 9 ist auf seiner Vorderseite elektrisch leitend über die Linse 24 mit dem Vorderteil 1 verbunden und auf seiner Rückseite mit dem metallischen Dämpfungskörper 10, an den in der Nut 11 ein Kabel 18 angelötet ist, das durch ein Isolierrohr 19 nach außen zu einer Kabelschelle 20 geführt ist, von wo das Kabel 21 zusammen mit den anderen Kabeln durch das Kabelrohr 22 nach außen geführt ist. Das zylindrische Teil 23 enthält nicht nur das Isolierrohr 19, sondern dient auch zur Zentrierung und Führung der Tellerfedern 14. Die hier beschriebene Vorrichtung funktioniert folgendermaßen: Der Piezo-Kristall 9 verwandelt einen elektrischen Impuls von geeigneter Resonanzfrequenz in ein entsprechendes Schallsignal, das von der Linse 24 auf ihren Brennpunkt konzentriert wird. Wenn sich im Brennpunkt ein Gegenstand befindet, dessen Material sich von dem übrigen Medium schalltechisch unterscheidet, also im allgemeinen ein fester Körper, dann reflektiert dieser Gegenstand das Schallsignal. Hat dieser Gegenstand eine zur Linsenachse senkrechte Oberfläche, so wird das Schallsignal zur Linse zurückgeworfen, von dieser konzentriert und vom Piezo-Kristall in einen elektrischen Impuls verwandelt, der aufgezeichnet werden kann. Hat der Gegenstand jedoch eine Oberfläche, die nicht senkrecht zur Linsenachse ausgerichtet ist, dann wird das von der Linse 24 ausgehende Schallsignal von dem Gegenstand jedenfalls bei Winkeln bis zu etwa 30° zu einer der acht Linsen 25 reflektiert, die die Linse 24 umgeben und dort ebenfalls von einem Piezo-Kristall in einen elektrischen Impuls umgewandelt, der registriert werden kann. Der Piezo-Kristall, der das stärkste Schallsignal empfängt, gibt einen Hinweis auf die Neigung der reflektierenden Oberfläche.

Als geeignetes Material für den Piezo-Kristall bei hohen Temperaturen erscheinen geeignet Blei-Zirkonat-Titanat, Blei-Meta-Niobat oder Lithium-Niobat. Das letztere hat den Vorteil, daß sein thermischer Ausdehnungskoeffizient dem eines austenitischen Stahls entspricht, was beim direkten Kontakt mit der Linse oder einem Dämpfungskörper von wesentlicher Bedeutung ist. Der Dämpfungskörper 10 soll die an der Rückseite des Piezo-Kristalls 9 ankommenden Schallschwingungen dämpfen, damit diese dort nicht reflektiert werden und die Aufzeichnung der von der Linse in den Piezo-Kristall eindringenden Schallschwingungen stört. Als Material für Dämpfungskörper bei hohen Temperaturen, insbesondere zusammen mit einem Lithium-Niobat als Piezo-Kristall hat sich ein austenitisches poröses Sintermetall mit einer Korngröße von etwa 0,3 mm bewährt.

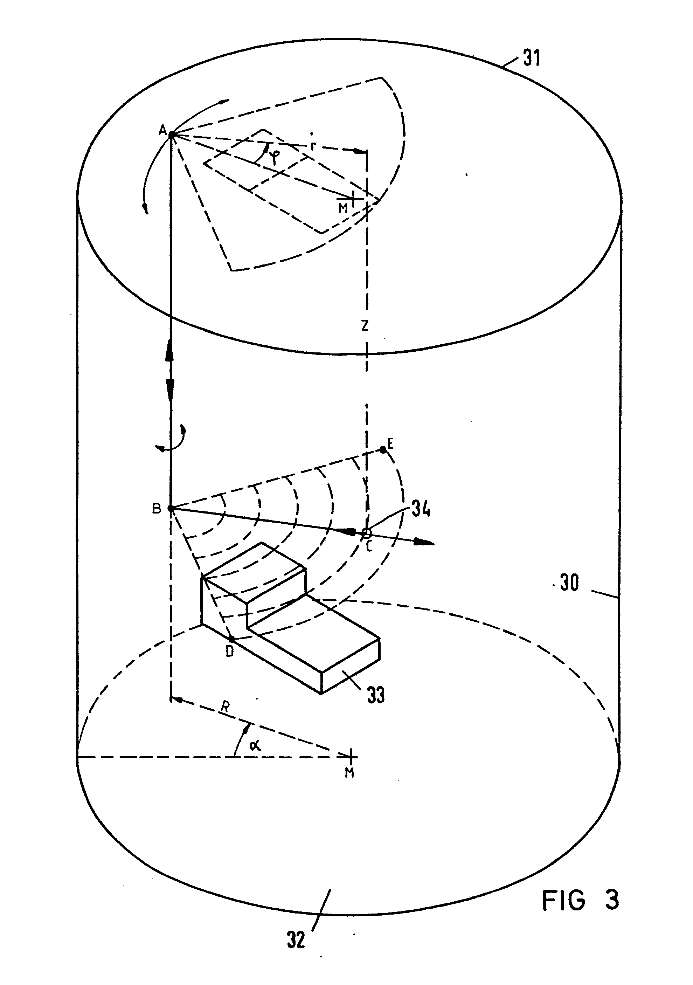

Figur 3 zeigt einen zylindrischen Tank 30, der mit flüssigem Natrium gefüllt ist, mit einem Drehdeckel 31 und einem unteren Boden 32, auf dem sich ein zu beobachtendes Objekt 33 befindet.

An einem Ort A mit den Polarkoordinaten R und $\alpha$ des Drehdeckels (der Punkt M bezeichnet die Mitte des Drehdeckels) befindet sich die Bewegungseinrichtung für das Unter-Natrium-Sichten, die aus einem vertikalen Gestänge AB und einem waagerechten klappbaren Ausleger BC besteht. Der Ausleger sei von Drehdeckeloberkante aus gesehen in einer Tiefe z, er überstreicht also durch Drehung des vertikalen Gestänges die waagerechte Fläche BDE. Der Sichtkopf 34, der auf dem Ausleger definiert hin- und herbewegt wird, hat in dieser Fläche die Koordinaten r und $\varphi$, wobei die Ausgangs- oder Nullstellung des gesamten Systems Drehdeckel-Bewegungseinrichtung dann gegeben ist, wenn $\alpha \equiv \varphi = 0°$ ist. Das heißt, die jeweilige Position des Sichtkopfes ergibt sich einerseits aus den Polarkoordinaten R und $\alpha$ des Drehdeckels und andererseits aus den Zylinderkoordinaten r, $\varphi$ und z der Bewegungseinrichtung. Die Drehdeckelkoordinaten müssen vom Drehdeckelantrieb beigestellt werden und die Sichtkopfkoordinaten werden mit Winkelgebern an den Antriebsmotoren der Bewegungseinrichtung gemessen. Waagerecht unter der Fläche BDE ist ein Stufenkörper als Objekt 33 angedeutet, der abgebildet werden soll. Der Sichtkopf wird in der Ebene BDE so bewegt, daß er praktisch jeden Punkt dieser Fläche einmal überfahren hat. Dabei werden diskontinuierlich (Impuls-Echo-Betrieb) in bestimmten, kleinen Abständen die Laufzeiten zu dem Objekt gemessen. Diese Laufzeiten t oder — umgerechnet über die Schallgeschwindigkeit in Natrium — diese Objektabstände x sind bei konstanter Tiefe z eine Funktion der Koordinaten r und beinhalten die Objektinformation. Statt der Laufzeit oder zusätzlich kann auch die Amplitude des empfangenen Signals, ggf. für die einzelnen Empfänger getrennt, ausgewertet werden. Daraus ergeben sich zusätzliche Informationen über Oberflächenbeschaffenheit, Fehler und/oder Neigung der beobachteten Objekte. Bei einem Abtastvorgang können somit beispielsweise gleichzeitig im Rechner Bilder der Laufzeiten, der Amplituden des zentralen Empfängers und der Summe der Amplituden der peripheren Empfänger aufgezeichnet werden. Das Abtasten der Fläche mit dem Sichtkopf 34 ist auf zweierlei Art möglich:

— Hin- und Herbewegen des Auslegers durch Drehen der Bewegungseinrichtung um den vollen Winkel ∢ DBE, und Sichtkopf nach jedem Durchgang um ein Wegelement $\Delta$r auf dem Ausleger weiterrücken lassen.
— Hin- und Herbewegen des Sichtkopfes auf der gesamten Länge $\overline{BD}$ des Auslegers, und Ausleger nach jedem Durchgang um ein Winkelelement $\Delta\varphi$ weiterdrehen lassen.

In der Figur 3 ist die erste Möglichkeit skizziert. Sie hat den Nachteil, daß die gesamte Bewegungseinrichtung beim Hin- und Herfahren bewegt werden muß (Ausleger bis zu 2 m lang). Die zweite Möglichkeit hat den Vorteil, daß die Hauptbewegung (Hin- und Herfahren) nur vom Sichtkopf ausgeführt wird, was eine höhere Stabilität des Systems gewährleistet. Eine dritte Möglichkeit, die hier der Vollständigkeit halber erwähnt werden soll, besteht darin, daß — wie im zweiten Fall — der Sichtkopf auf der Länge $\overline{BD}$ des Auslegers hin- und herbewegt wird und nach jedem Durchgang der Drehdeckel mitsamt der Bewegungseinrichtung um ein Winkelelement $\Delta\alpha$ verfahren und der Ausleger um denselben Winkel $\Delta\varphi \equiv \Delta\alpha$ weitergedreht wird. Hierdurch bleibt der Ausleger jeweils zu seiner vorherigen Lage in sich selbst parallel und der Rasterlinienabstand bleibt ausreichend konstant, wenn der gesamte Verfahrwinkel nicht zu groß gewählt wird. Jedoch ist es nicht zweckmäßig, den Drehdeckel definiert schrittweise um solche kleine Schritte (z. B.: 0,5 mm) zu verfahren; außerdem wäre dies ein zusätzlicher Verschleiß insbesondere der Drehdeckellagerung und -abdichtung. Die Anzahl der Meßpunkte (d. h. der Laufzeitmessungen) pro Zeiteinheit nennt man Impulsfolgefrequenz. Sie wird von einer elektronischen Steuereinheit vorgegeben und ist als konstant vorausgesetzt. Sie ist einerseits durch die Fahrgeschwindigkeit des Sichtkopfes und andererseits durch das geforderte Auflösevermögen bestimmt. Es sei z. B. die Geschwindigkeit v = 100 mm/s und die Trennung zweier Objektpunkte gewünscht, deren Abstand $\Delta$y = 1 mm zueinander beträgt, so ergibt sich die minimal notwendige Impulsfolgefrequenz zu:

$$\nu, \min = \frac{v}{\Delta y} = 100 \text{ Hz}$$

Die Bildrekonstruktion der abgetasteten Oberflächen geschieht über einen nicht dargestellten Rechner, der einerseits die Bewegungsabläufe steuert und andererseits die Koordinaten- und Ultraschallsignale verarbeitet. So kann die aufgenommene Fläche Punkt für Punkt auf einem Sichtgerät oder einem Plotter dargestellt werden. Wie bereits erwähnt, setzt sich jeder Punkt des Bildes aus folgenden Signalen zusammen: Aus den Polarkoordinaten des Drehdeckels R und $\alpha$, aus den Zylinderkoordinaten der Bewegungseinrichtung z, r und $\varphi$ und z. B. aus der Ultraschall-Laufzeit t bzw. dem Abstand x zwischen dem Objekt und der Bezugsfläche BDE. Bei einer vorgegebenen Abtastfläche im Reaktortank sind jedoch die Koordinaten R, $\alpha$ und z konstant und legen sozusagen die Bezugsfläche fest, von der aus betrachtet wird. Der Rechner muß also während der Bildaufnahme die restlichen Koordinaten r, $\varphi$ und x verarbeiten. Durch gezielte Koordinatentransformationen und Koordinatendrehungen läßt sich das Bild rechnerisch, elektronisch in jeder gewünschten Lage isometrisch (nicht perspektivisch) darstellen und für den Betrachter anschaulicher machen. Jedoch muß der Rechner diese Operation für jeden Punkt durchführen, was insbesondere durch die trigonometrischen Funktionen zu einer relativ langen Bildentstehungszeit führt (jede trigonometrische Funktion wird im Rechner durch eine Reihenentwicklung ersetzt). Daher ist es zweckmäßig, nur noch die Informationen zur Bilderzeugung heranzuziehen, bei denen sich etwas geändert hat. Dies bedeutet zwar von der Optik her eine Minderung des Bildeindrucks, erfüllt aber den Zweck, Gegenstände zur objektiven Begutachtung etwaiger Veränderungen darzustellen.

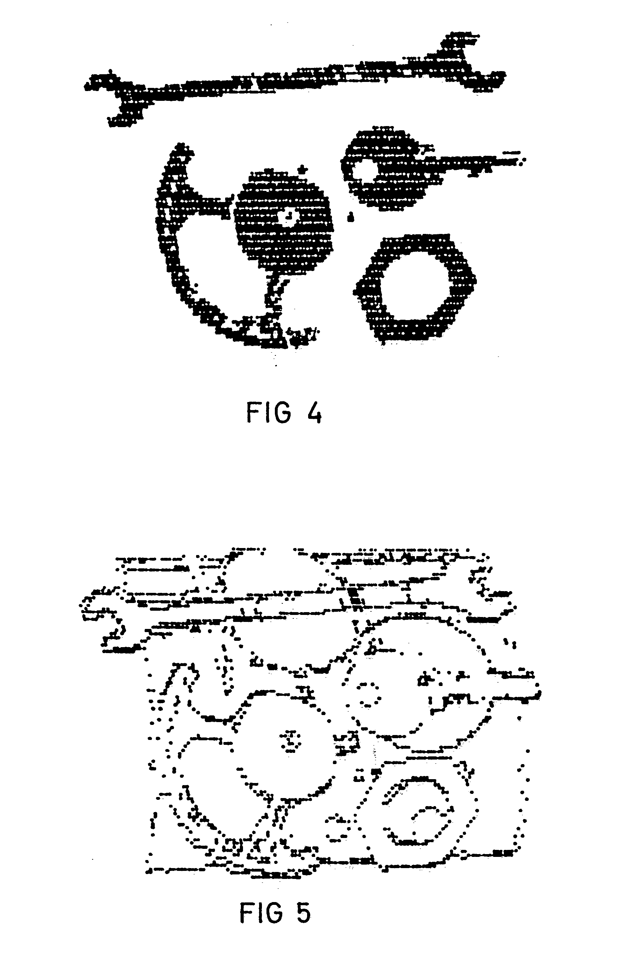

Die Figuren 4 und 5 zeigen Beispiele von aufgenommenen Objekten. In Figur 4 wurden alle Meßpunkte verarbeitet, während in Figur 5 nur solche Meßpunkte verarbeitet wurden, bei denen eine Änderung gegenüber dem vorhergehenden Meßpunkt registriert wurde. Es ist insbesondere in Figur 4 zu erkennen, daß alle Kanten, die nicht senkrecht (oder auch parallel) zur Abtast-Richtung liegen, »gezackt«, d. h. unscharf wiedergegeben werden. Dies läßt sich nur durch kleinere Rasterlinienabstände $\Delta$r verbessern, was jedoch auf der anderen Seite wieder einen höheren Informationsfluß bedeutet und damit die Bildentstehungszeit vergrößert. Hiermit ist auch erklärt, weswegen die runden Bohrungen nicht rund abgebildet werden. Aus Figur 5 ist ersichtlich, daß mit diesem Verfahren auch Teile abgebildet werden können, die in etwas verschiedenen Höhen liegen. Das beste Auflösungsvermögen wird jedoch erreicht, wenn sich das abgetastete Objekt in der Nähe des Schnittpunktes der Sender- und Empfängerachsen befindet. Die hellen Stellen in Figur 4 auf dem Schraubenschlüssel und dem Zahnrad links unten deuten auf Fehler in der Oberfläche hin. Bei späteren genaueren Versuchen wurden noch Bohrungen von 0,5 mm nachgewiesen.

**Patentansprüche:**

1. Vorrichtung zur Feststellung von Gestalt und Oberflächenbeschaffenheit eines Gegenstandes, insbesondere in heißen Flüssigkeiten, mittels eines zentralen, gerichteten Ultraschallsenders (6) und mehreren um diesen herum auf einem Umkreis angeordneten, gerichteten Empfängern (8), gekennzeichnet durch die Kombination folgender Merkmale:

a) Die in Sende- bzw. Empfangsrichtung liegenden Achsen von Sender (6) und Empfängern (8) sind auf einen gemeinsamen Punkt gerichtet;

b) Sender und Empfänger sind zusätzlich zur Doppelfokussierung mit Schalldurchtrittselementen (24 bzw. 25) ausgestattet, wobei die Schalldurchtrittselemente (24 bzw. 25) so geformt sind, daß sie bei Betriebsbedingungen Brennpunkte im Schnittpunkt der Sender- bzw. Empfängerachsen aufweisen;

c) Sender und Empfänger sind gemeinsam in Position und/oder Richtung veränderbar.

2. Vorrichtung nach Anspruch 1, gekennzeichnet durch folgendes Merkmal:

Der zentrale Sender (6) wird ebenfalls als Empfänger benutzt.

3. Vorrichtung nach Anspruch 1 oder 2, gekennzeichnet durch folgende Merkmale:

a) Um den Sender (6) sind acht Empfänger (8) kreisförmig mit jeweils gleichem Abstand zum Schnittpunkt der Sender- bzw. Empfängerachsen angeordnet;

b) Sender (6) und Empfänger (8) sind in einem kompakten Block (1) integriert.

4. Vorrichtung nach Anspruch 1, gekennzeichnet durch folgendes Merkmal:

Die Fläche des Schalldurchtrittselements (24) des Senders (6) ist größer als die Fläche des Schalldurchtrittselements (25) jedes einzelnen der ihn umgebenden Empfänger (8).

**Claims:**

1. A device for determining the shape and surface properties of an object, in particular in hot liquids, by means of a central, directed ultrasonic transmitter (6) and a plurality of directed receivers (8) arranged around said transmitter in the form of a circle, characterised by the combination of the following features:

a) the axes of the transmitter (6) and of the receivers (8), which are respectively directed towards a common point located in the transmitting or receiving directions as the case may be;

b) in addition to this double focusing, the transmitter and receivers are equipped with sound passage elements (24 and 25 respectively), where the sound passage elements (24 and 25) are shaped such that under operating conditions they possess focal points at the intersection point of the transmitter and receiver axes; and

c) the transmitter and the receivers can be commonly changed in respect of position and/or direction.

2. A device as claimed in Claim 1, characterised by the following feature:

the central transmitter (6) is also used as a receiver.

3. A device as claimed in Claim 1 or 2, characterised by the following features:

a) eight receivers (8) are arranged in the form of a circle around the transmitter (6), each at an equal distance from the intersection point of the transmitter and receiver axes; and

b) the transmitter (6) and receivers (8) are integrated in a compact block (1).

4. A device as claimed in Claim 1, characterised by the following feature:

the surface of the sound passage element (24) of the transmitter (6) is larger than the surface of the sound passage element (25) of each of the individual receivers (8) by which it is surrounded.

**Revendications**

1. Dispositif pour déterminer la forme et l'état de surface d'un objet, notamment dans des liquides chauds, à l'aide d'un émetteur ultrasonique central orienté (6) et de plusieurs récepteurs orientés (8) disposés sur un cercle autour de cet émetteur, caractérisé par la combinaison des caractéristiques suivantes:

a) les axes, situés dans la direction d'émission et dans la direction de réception, de l'émetteur (6) et du récepteur (8) sont orientés sur un point commun;

b) l'émetteur et les récepteurs sont pourvus, en-dehors de la focalisation double, d'éléments (24 ou 25) de traversée du champ, qui sont conformés de telle sorte que, dans des conditions de fonctionnement, ils possèdent des foyers au point d'intersection des axes de l'émetteur et des récepteurs;

c) la position et/ou la direction de l'émetteur et des récepteurs peuvent être modifiées en commun.

2. Dispositif suivant la revendication 1, caractérisé par la caractéristique suivante:

l'émetteur central (6) est également utilisé comme récepteur.

3. Dispositif suivant la revendication 1 ou 2, caractérisé par les caractéristiques suivantes:

a) huit récepteurs (8) sont disposés sur un cercle autour de l'émetteur (6), à une même distance du point d'intersection des axes de l'émetteur et des récepteurs;

b) l'émetteur (6) et le récepteur (8) sont intégrés dans un bloc compact (1).

4. Dispositif suivant la revendication 1, caractérisé par la caractéristique suivante:

la surface de l'élément (24) de traversée du son de l'émetteur (6) est supérieure à la surface de l'élément (25) de traversée du son de chacun des récepteurs (8) entourant l'émetteur.

FIG 1

FIG 2

FIG 3

FIG 4

FIG 5